Europäisches Patentamt

European Patent Office

Office européen des brevets

(11) Veröffentlichungsnummer: **0 350 645**
**A2**

(12) ## EUROPÄISCHE PATENTANMELDUNG

(21) Anmeldenummer: 89110855.7

(51) Int. Cl.⁴: **B23K 7/00 , B23K 31/00**

(22) Anmeldetag: 15.06.89

(30) Priorität: 06.07.88 DE 3822833

(43) Veröffentlichungstag der Anmeldung:
17.01.90 Patentblatt 90/03

(84) Benannte Vertragsstaaten:
FR GB IT NL SE

(71) Anmelder: Klöckner-Wilhelmsburger GmbH
Borsigstrasse 24
D-2054 Geesthacht(DE)

(72) Erfinder: Noll, Hans,
Schlossberger Weg 1
D-4019 Monheim(DE)
Erfinder: Schellman, Wolfgang, Dr.
Am Häcklinger Dorfe 1A
D-2120 Lüneburg(DE)

(74) Vertreter: Vomberg, Friedhelm, Dipl.-Phys.
KLÖCKNER-WERKE AG Patentabteilung
Klöcknerstrasse 29
D-4100 Duisburg 1(DE)

(54) Verfahren und Vorrichtung zum maschinellen Brennschneiden oder Verschweissen eines Rohres.

(57) Um bei einem maschinellen Brennschneiden eines Rohres oder Verschweißen von mindestens einem Nebenrohr an einem Rohr die seitliche Verschiebung bzw. durch unkorrekte Führung des rotierenden Rohres über die Antriebsrollen (Schlupf) bedingten Schweiß- oder Schneidfehler zu vermeiden, wird vorgeschlagen, daß der Ist-Drehwinkel ($\gamma$) des Rohres (1) und/oder die Ist-Drehgeschwindigkeit (v) des Rohres (1) und/oder die axiale und/oder die radiale Ist-Lage ($x_s$, $x_r$) des Rohres zu messen und bei Abweichen der Ist-Werte von gewünschten Soll-Werten entsprechende Korrekturen der Brenner oder Schweißkopfbewegung (4) oder der Rohres (1) vorzunehmen.

Fig.1

## Verfahren und Vorrichtung zum maschinellen Brennschneiden oder Verschweißen eines Rohres

Die Erfindung betrifft ein Verfahren und eine Vorrichtung zum maschinellen Brennschneiden eines Rohres oder Verschweißen von mindestens einem Nebenrohr an einem Rohr, wobei das Rohr in einem Futter eingespannt um die Rohrlängsachse über Rollen rotierend bewegt wird und ein Brenner außerhalb oder innerhalb des Rohres verstellbar entlang der zu schneidenden oder verschweißenden Durchdringungslinie geführt wird, wobei das Rohr entweder durch das Futter oder das Futter und die Rollen oder nur durch die Rollen rotierend bewegt wird.

Beim Brennschneiden wie auch beim Verschweißen von Rohren tritt das Problem einer exakten Führung des Schneid- oder Schweißbrenners entlang der Rohroberfläche auf.

Die vom Schneid- oder Schweißbrennerkopf in bezug auf das Rohr abzufahrenden Raumkurven resultieren letztendlich aus der Dreh-und Translationsbewegung des Schweiß- oder Schneidkopfes, die über ein Getriebe miteinander gekoppelt werden. Dazu kommt die eingangs erwähnte Drehbewegung des Rohres.

Die bislang bekannten und gebauten Maschinen sind mit Spannfuttern für das zu drehende Rohr ausgerüstet, wobei das Rohr zusätzlich auf einem oder mehreren unangetriebenen Rollenwagen aufliegt. Mit diesen Maschinen sind bislang Rohre mit einem Gewicht von 50 t und einem Rohrdurchmesser bis zu 2000 mm bearbeitet worden. Bei einem Futter mit einem Durchgang von 950 mm können Rohre mit einem größeren Durchmesser nur vor dem Futter von innen gespannt werden. Das bedeutet, wenn ein Rohr beidseitig beschnitten werden soll, was bei 90 % der Arbeit der Fall ist, muß das Rohr gedreht werden, wenn man nicht ein großes Schrottende in Kauf nehmen will. Außerdem ist dann das exakte Ausrichten des zweiten Schnitts auf den ersten Schnitt sehr schwierig und zeitaufwendig. Es müssen auf jeden Fall beide Schnitte zueinander vor dem Brennschnitt angeris sen werden. Bedingt durch die Unrundheiten und Abweichungen der Mittellinie von einer Geraden der Rohre wandert - auch bei stärkster Spannung des Futters - das Rohr in axialer Richtung aus und verdreht sich ebenfalls radial im Futter.

Es ist daher Aufgabe der Erfindung, das gattungsgemäße Verfahren und die gattungsgemäße Vorrichtung derart weiterzubilden, daß die durch seitliche Verschiebung bzw. durch unkorrekte Führung des rotierenden Rohres über die Antriebsrollen (Schlupf) oder die Futterspannung bedingten Schweiß- oder Schneidfehler vermieden werden.

Die Aufgabe wird dadurch gelöst, daß der Ist-Drehwinkel des Rohres und/oder die Ist- Drehgeschwindigkeit des Rohres und/oder die axiale und/oder die radiale Ist-Lage des Rohres gemessen wird bzw. werden und bei Abweichen der Ist-Werte von gewünschten Soll-Werten entsprechende Korrekturen der Brenner- oder Schweißkopfbewegung und/ oder des Rohres vorgenommen werden. Unter der Brenner- oder Schweißkopfbewegung sind sowohl die Pendelbewegung als auch die Wegsteuerung als auch die Einhaltung des Pendelpunktes zu verstehen. Durch das erfindungsgemäße Verfahren können in Längs- und Radialrichtung des Rohres auftretende Rohrverschiebungen einerseits und andererseits gleichzeitig Abweichungen des Drehwinkels und der Drehwinkelgeschwindigkeit vermieden werden, wie sie durch unzureichenden Reibungsschluß zwischen den Antriebseinheiten für das Rohr bei der Drehbewegung auftreten.

Nach einer Weiterbildung der Erfindung können die Ist-Werte des Drehwinkels, der Drehwinkelgeschwindigkeit und/oder die axiale und/oder die raiale Lage des Rohres kontinuierlich gemessen werden und jeweils mit fest vorgegebenen Sollwerten verglichen werden. Nach dem jeweils festgestellten Grad der Abweichung von diesen Soll-Werten wird die Brenner- und/oder Schweißkopfbewegung korrigiert.

Alternativ hierzu und nach einer anderen Ausgestaltung der Erfindung ist es auch möglich, einen oder mehrere der genannten Ist-Werte in vorgebbaren Zeitabständen zu messen und den bzw. die momentanen Ist-Werte mit den jeweils vorangegangenen Ist-Werten zu vergleichen, die dann als Soll-Werte dienen. Zu Beginn des Brenn schneidens oder Schweißens, wenn noch keine Istwerte vorliegen, können aus die Rohrgeometrie berücksichtigenden Berechnungen resultierende theoretische Soll-Werte vorgegeben werden.

Nach einer Weiterbildung der Erfindung ist es jedoch auch möglich, so z.B um Ist-Werte vor dem Beginn des Brennens bzw. Schweißens zu erhalten, das Rohr mindestens eine Drehung von 360° durchlaufen zu lassen, bei der die tatsächliche Rohrgeometrie gemessen, die Meßwerte in einem Rechenspeicher gespeichert werden und beim Schweißen oder Brennschneiden entsprechend berücksichtigt werden. Vorzugsweise wird die Rohrgeometrie über die gesamte Rohrlänge gemessen.

Nach einer weiteren Ausgestaltung der Erfindung werden der Ist-Drehwinkel und/oder die Ist-Drehgeschwindigkeit und/oder die axiale und/oder die radiale Ist-Lage eines festen Punktes des Rohres relativ zu mindestens einem Hilfskörper, der auf einer parallel zur Rohrachse liegenden Achse oder in der Rohrdrehachse feststehend angeordnet oder mit konstanter Drehgeschwindigkeit geführt wird, gemessen. Der oder die Hilfskörper schaffen somit einen vom Rohrantrieb und dem Rohr selbst unabhängigen Bezugspunkt, von dem aus die tatsächliche Ist-Lage, bezogen auf die Drehwinkelstellung und die Stellung des Rohres in Rohrlängsrichtung wie in radialer Richtung, und die Drehwinkelgeschwindigkeit jederzeit exakt gemessen wird und bei Abweichung der Ist-Werte von den gewünschten Soll-Werten eine entsprechende Drehwinkel- und/oder Lagekorrektur des Rohres und/oder eine Brennerbewegungskorrektur gesteuert werden kann. Nach dem Erfindungsgedanken kommen sowohl mechanische als auch elektromagnetische oder opto-elektromagnetische Überwachungssysteme in Betracht.

Nach einer weiteren Ausgestaltung der Erfindung rotiert der Hilfskörper mindestens mit der Soll- oder Ist-Drehgeschwindigkeit des Rohres. Der fest vorgewählte Punkt des Rohres hat im Idealfall, der angestrebt wird, stets dieselbe Lage zu dem sich mitdrehenden Hilfskörper. Bei Abweichen aus dieser Ideallage sorgt eine kurzzeitige Drehwinkelbeschleunigung des Rohres und/oder eine Verschiebung des Rohres in radialer oder axialer Richtung zur Wiederherstellung des Soll-Zustandes oder die Brennerstellung bzw. -bewe gung wird entsprechend der abweichenden Drehwinkel-, Drehgeschwindigkeit oder Lage des Rohres entsprechend korrigiert.

Vorzugsweise besteht zwischen dem festen Punkt des Rohres und dem Hilfskörper eine elektromagnetische Signalstrecke, die nach einer Weiterbildung der Erfindung durch einen Laser oder eine Infrarotlichtquelle und dementsprechende Empfänger realisiert wird. In der Praxis hat es sich als günstig erwiesen, daß der Sender auf der Rohrmantelfläche und der Empfänger auf dem Hilfskörper angeordnet ist.

In einer konkreten Ausgestaltung der Erfindung wird der Sender oder der Empfänger, vorzugsweise mit der Soll-Drehgeschwindigkeit des Rohres, auf einer Kreisbahn, die senkrecht zur Rohrlängsachse verläuft, im gleichen Abstand von dem Empfänger oder Sender auf der Rohrmantelfläche oder parallel dazu geführt. Dreht sich das Rohr mit der Soll-Drehgeschwindigkeit und wird der Hilfskörper mit derselben Soll-Drehgeschwindigkeit auf einer Kreisbahn um das Rohr herumgeführt, so bleibt die relative Lage des Senders zum Empfänger bzw. die Sendestrecke konstant. Es sind jedoch auch Lösungen denkbar, nach denen der Hilfskörper mit einer höheren oder niedrigeren als der Soll-Drehgeschwindigkeit des Rohres in gleicher oder entgegengesetzter Drehrichtung um das Rohr geführt wird. In durch die beiderseitigen Drehgeschwindigkeiten bestimmten zeitlichen Abständen nehmen dann der Hilfskörper und der feste Punkt der Rohroberfläche im Idealfall stets dieselbe Lage zueinander ein. z.B bei Abweichungen aus dieser Ideallage sorgt eine Steuervorrichtung für eine entsprechende Lagekorrektur bzw. Drehgeschwindigkeitskorrektur des Rohres oder eine Brennerbewegungskorrektur.

Alternativ zu der vorbeschriebenen Ausführungsform kann jedoch auf dem Rohr auch ein passives Element, vorzugsweise ein Signalwandler angeordnet sein, das bzw. der die vom Sender des Hilfskörpers ausgesandten Signale in umgewandelter Form zum Empfänger des Hilfskörpers reflektiert. Der Hilfskörper ist dann mit einer kombinierten Sende-/Empfangseinrichtung bestückt. Diese Verfahrensführung hat den Vorteil, daß nur die Sende/Empfangsvorrichtung mit Spannung bzw. Strom versorgt werden muß.

Ein mechanisch arbeitendes Verfahren nach der vorliegenden Erfindung arbeitet dargestalt, daß an einem festen Punkt des Rohres ein Bügel befestigt ist, dessen freies Ende in einen in der Rohrlängsachse angeordneten, mit der Soll-Drehgeschwindigkeit des Rohres rotierend gelagerten Hilfskörper hineinragt und daß bei Drehgeschwindigkeits- oder Lageabweichungen des Rohres ein Steuersignal an die Antriebsvorrichtung des Rohres und/oder des Brenners abgegeben wird.

Die auf die gattungsgemäße Vorrichtung bezogene Aufgabe wird dadurch gelöst, daß auf dem Rohr ein Sender oder Empfänger und auf einer parallel zur Rohrdrehachse liegenden Achse oder in der Rohrdrehachse ein Hilfskörper mit einem Empfänger oder einem Sender feststehend oder mit einer konstanten Drehgeschwindigkeit führbar angeordnet ist und daß der Empfänger mit einer Steuervorrichtung für die Brennerbewegung und/oder für die geometrische Lage-bzw. Drehgeschwindigkeit des Rohres verbunden ist.

Vorzugsweise ist der Antrieb für den Hilfskörper auf jede Soll-oder Ist-Drehgeschwindigkeit des Rohres einstellbar, so daß unterschiedliche Schneid- oder Schweißvorgänge ohne Umrüsten mit derselben Maschine durchgeführt werden können.

Weitere vorteilhafte Ausgestaltungen der erfindungsgemäßen Vorrichtung sind in den Unteransprüchen 16 bis 19 dargelegt, wobei sich bei der entsprechenden Vorrichtung die bereits oben behandelten Vorteile jeweils einstellen.

Das erfindungsgemäße Verfahren bzw. die erfindungsgemäße Vorrichtung kann jedoch nicht nur beim Rohrbrennschneiden oder -schweißen, gleichgültig ob es automatisch oder manuell durchgeführt wird, angewendet bzw. eingesetzt werden, sondern z.B bei Rollenböcken aller Art, zur Positionierung von sich drehenden Körpern, beim Anreißen von Körpern sowie bei der Geschwindigkeitsüberwachung von sich drehenden Körpern.

Ausführungsbeispiele der Erfindung sind in den Zeichnungen dargestellt. Es zeigen:

3

Figur 1 eine schematische Ansicht der erfindungsgemäßen Vorrichtung,

Figur 2 die Seitenansicht eines an ein Hauptrohr angeschweißten bzw. anzuschweißenden Nebenrohres,

Figuren 3 - 5 jeweils schematische Ansichten der erfindungsgemäßen Vorrichtung in perspektivischer Detaildarstellung,

Figur 6 die Querschnittsansicht einer weiteren erfindungsgemäßen Vorrichtung und

Figur 7 eine Schnittansicht einer erfindungsgemäßen Vorrichtung, bei der der Hilfskörper mit kleinerer Drehwinkelgeschwindigkeit um das rotierend geführte Rohr bewegt wird und

Figur 8 ein Rohr mit einer Durchdringung.

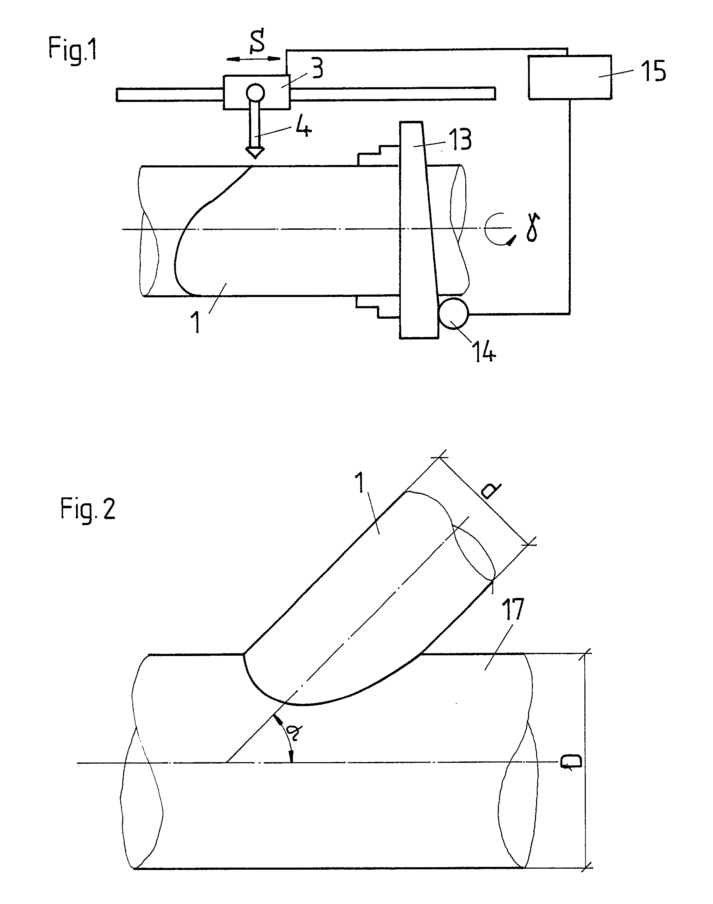

Bei der in Figur 1 dargestellten Vorrichtung ist zum Antrieb des Rohres 1 ein Drehgeber 14 mit dem Futter 13 starr verbunden. Bei Drehung des Rohres 1 gibt der Drehgeber 14 die Drehwinkelwerte $\gamma$ von 0 - 360 an die Steuereinheit 15.

Soll z.B an ein Hauptrohr 17 ein Nebenrohr 1 angeschweißt werden, so wird der Weg s, den der Brenner 4 zurückzulegen hat von der Steuereinheit wie folgt berechnet (vergl. Fig. 2):

$$ s = \frac{D}{2\sin\alpha} + \frac{\alpha}{2\tan\alpha} - \sqrt{1 - \left(\frac{d}{D}\sin\gamma\right)^2} \cdot \frac{D}{\sin\alpha} - \frac{\cos\gamma \cdot d}{2\tan\alpha} $$

wobei D den Innen- oder Außen- Durchmesser des Hauptrohres 17, d den Innen- oder Außen- Durchmesser des Nebenrohres 1 , $\alpha$ den Neigungswinkel der jeweiligen Rohrlängsachsen des Haupt- und des Nebenrohres zueinander und $\gamma$ den jeweiligen Drehwinkel bezeichnen. Der errechnete Wert s wird zur Steuerung des Brennerwagens 3, der den Brenner 4 trägt,übertragen.

Wenn nun das Rohr 1 sich unkontrolliert axial und radial im Futter verschiebt, ergibt das Abweichungen von der Soll-Schnittlinie und damit einen Fehlschnitt.

Durch das erfindungsgemäße Verfahren kann z.B die Abweichung des Rohres in axialer und radialer Richtung und der tatsächliche Drehwinkel $\gamma$ des Rohres ermittelt werden, die Meßwerte können der Steuereinrichtung 15 zugeführt werden, der dann den Wert für den Weg s des Brennerwagens entsprechend korrigiert. Damit ist der gewünschte Sollwert erreicht, das heißt der Weg s ist z.B eine Funktion des Drehwinkels $\gamma$ und das Auswandern des Rohres in axialer und in radialer Richtung wird je nach Wanderrichtung des Rohres zu dem von der Steuereinrichtung errechneten Wert s addiert bzw. subtrahiert.

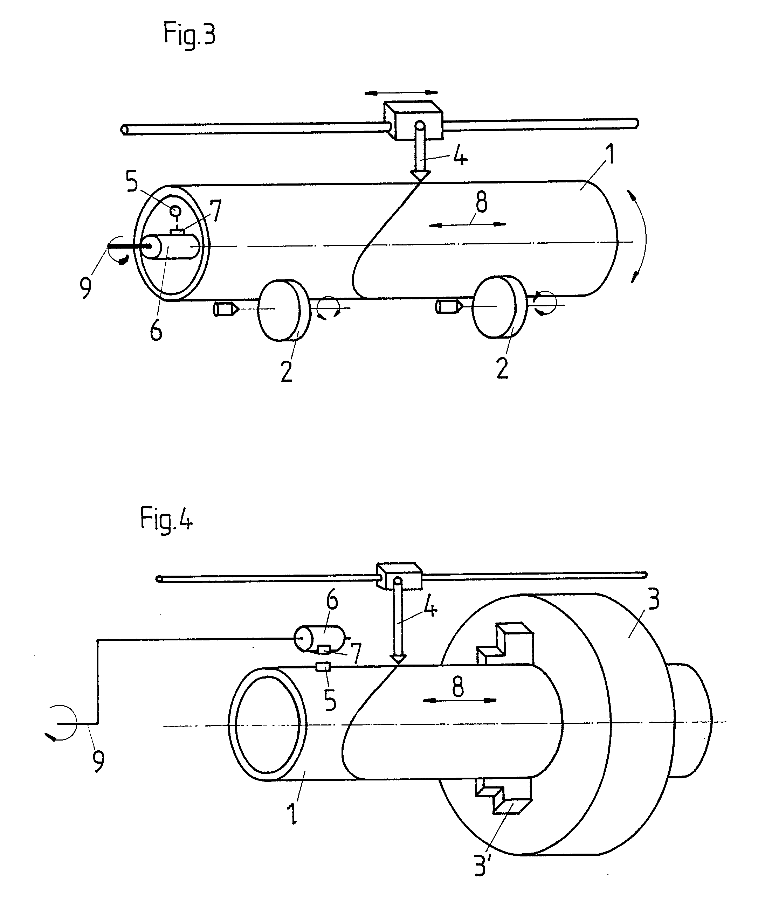

Figur 3 zeigt das erfindungsgemäße Verfahren bei einer Rohrbrennschneidmaschine, auf der das zu schneidende Rohr auf zwei angetriebenen Rollenböcken gedreht wird, die kein Spannfutter haben. Die Vorteile einer solchen Vorrichtung bzw. des darauf durchgeführten Verfahrens liegen in der billigeren Herstellung, der Tatsache, daß kein Durchmesserlimit besteht und daß zwei Seiten des Rohres ohne Umdrehen des Rohres geschnitten werden können. Ebenso können Rohre beliebig großen Gewichtes bearbeitet werden.

Die in den Figuren 3 bis 5 dargestellte Vorrichtung besteht aus einem Hilfskörper 6 mit einem Empfänger 7 und einem Sender 5, der sich an einem festen Punkt des Rohres 1 befindet. Dieses Rohr 1 wird über Antriebsrollen 2 in Rotation versetzt, wobei der Schneidbrenner 4 entsprechende Schnitte des Rohres, wie in Figuren 1 und 2 angedeutet, durchführt. Das in Figur 2 dargestellte Rohr 1 wird über einen Drehantrieb 3 mit Spannbacken 3', in die das Rohr eingeklemmt ist, in Rotation versetzt.

Allen in Figuren 3 bis 5 dargestellten Vorrichtungen ist gemeinsam, daß zwischen dem Sender 5 und dem Empfänger 7 eine Signalübertragungsstrecke besteht, bei der die jeweiligen relativen Lagen des Senders 5 zum Empfänger 7 bzw. deren Lageverschiebung meßbar ist.

So kann es z.B vorkommen, daß die Drehgeschwindigkeit des Rohres 1 um die Längsachse 9, etwa bedingt durch auftretenden Schlupf an den Antriebsrollen, nicht mit der Soll-Drehgeschwindigkeit übereinstimmt. Der feste Punkt des Rohres mit dem Sender 5 wird dann gegenüber dem Soll-Wert nach- oder voreilen, was schon beim ersten Auftreten des Schlupfes gemessen wird. Dieses Meßsignal wird über eine nach dem Stand der Technik bekannte Signalverarbeitung schließlich in ein Steuerungssignal für den Brenner und/oder den Rohrantrieb umgewandelt. Das Rohr 1 kann aber auch seitlich in Richtung der Längsachse, dargestellt durch Doppelpfeil 8 aus der Ideallinie laufen, was in entsprechender Weise vom Empfänger 7 registriert wird und schließlich zu einer Bewegungs- oder Lagekorrektur des Brenners und/oder des Rohres 1 führt.

Während bei der in Figur 3 dargestellten Vorrichtung die Rohrlängsachse mit der Längsachse des

4

Hilfskörpers übereinstimmt und der Hilfskörper innerhalb des Rohres achssymmetrisch mit der Soll-Drehgeschwindigkeit des Rohres rotiert, ist der Sender 5 bei der nach Figur 4 vorgesehenen Ausführung auf dem Rohraußenmantel angeordnet und liegt einem Hilfskörper 6 mit Empfänger 7 gegenüber, der mit der vorgegebenen Soll-Drehgeschwindigkeit des Rohres 1 um die Achse 9 des Rohres rotiert.

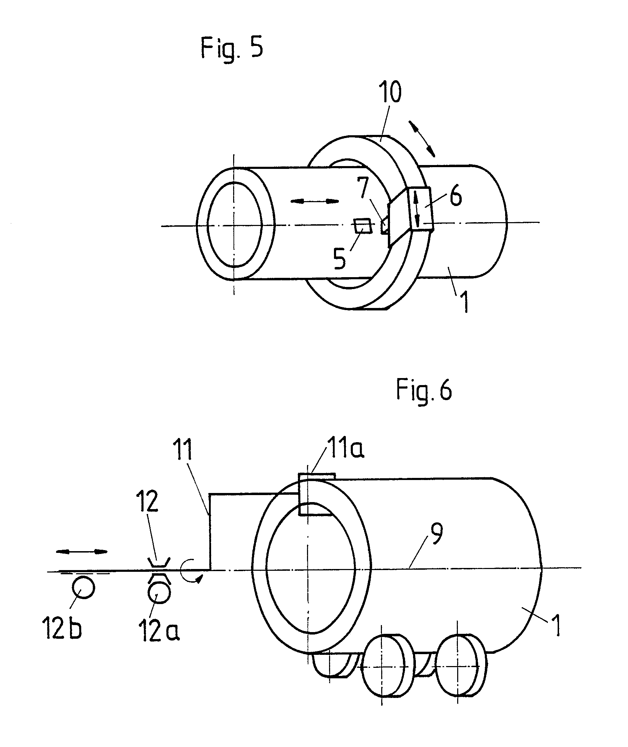

Bei der Ausführungsform gemäß Figur 5 ist der Hilfskörper 6 über einer ringförmigen Schiene 10 angeordnet, wobei entweder die gesamte Schiene mit fest hierauf angebrachtem Hilfskörper 6 mit der Rohr-Soll-Drehgeschwindigkeit rotiert oder der Hilfskörper 6 einen Eigenantrieb besitzt, mittels dessen er über den feststehenden Ring 10 gleitet.

Nach der in Figur 6 dargestellten Vorrichtung ist über eine Klammer 11a das Rohrende mit einem Bügel 11 verbunden, dessen Achse sich in dem Körper 12 dreht und sich gleichzeitig axial in Richtung der Rohrachse bewegen kann. Der Bügel 11 dreht sich mit der Rohr-Ist-Drehgeschwindigkeit um die Rohrlängsachse 9.

Die momentane geometrische Lage des Rohres 1 wird radial durch den Drehgeber 12b aufgenommen und durch den Steuerbefehl zur entsprechenden Bewegungs- und/oder Lagerkorrektur des Brenners und/oder des Rohres umgewandelt.

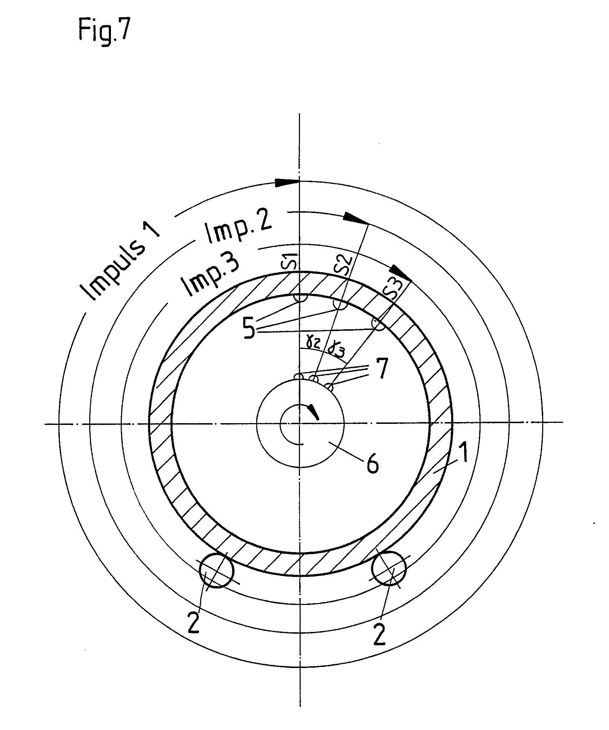

In Figur 7 ist skizziert, wie die erfindungsgemäße Vorrichtung arbeitet, wenn der Hilfskörper 6 mit dem Empfänger 7 mit einer geringeren Geschwindigkeit inmitten des Rohres rotiert als der Rohr-Soll-Drehge-schwindigkeit. Bei einer Signalgabe $s_1$ wird die Nullstellung angenommen. Nach einer gewissen Zeit hat das Rohr einen Winkel von 360° plus $\gamma_2$ bestritten. Bei der Signalgabe $s_2$ stehen sich Sender 5 und Empfänger 7 wieder gegenüber. Nach einer entsprechend gleich langen Zeit hat das Rohr bezogen auf die Nullstellung den Winkel 360° plus $\gamma_2$ plus $\gamma_3$ bestritten. Aus den vorgegebenen Drehgeschwindigkeiten des Rohres und des Hilfskörpers kann jeweils vorbestimmt werden, an welchen Orten sich der Sender 5 zu bestimmten Zeiten befinden muß. Trifft das Signal des Senders 5 früher oder später auf den Empfänger 7, so liegt eine Abweichung von der Drehwinkel-Sollgeschwindigkeit des Rohres 1 vor, die nach der vorliegenden Erfindung zur Drehgeschwindigkeitskorrektur oder Korrektur der Brennerbewegung führt.

Die vorliegende Erfindung ermöglicht es erstmals, einen sauberen Anpassungsschnitt durchzuführen, da erstmals das Wandern des Rohres in axialer Richtung und der Schlupf zwischen den Antriebsrollen und dem Rohr beim Drehen berücksichtigt werden kann. Vorzugsweise wird mit Hilfe der beschriebenen Sender und Empfänger der tatsächliche Drehwinkel $\gamma$ ermittelt und in die Steuereinrichtung 15 geleitet, der dann unter Berücksichtigung der Auswanderung des Rohres in Achsrichtung nach der oben beschriebenen Berechnung den Weg s ermittelt und entsprechend den Brennerwagen 3 (s. Fig. 1) steuert.

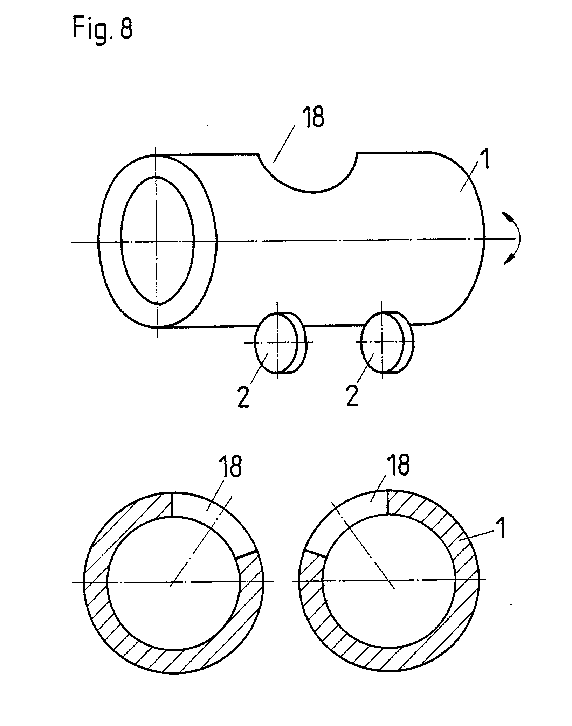

Fig. 8 zeigt eine Durchdringung, bei der ein Rohr eingesetzt werden kann. Hier ist das anmeldungsgemäße Verfahren anwendbar. Im Gegensatz zur beschriebenen Anpassung wird das Rohr nicht 360° gedreht, sondern oszilliert entsprechend dem Durchdringungsdurchmesser, wie in den Schnittdarstellungen gezeigt. Der Weg s des Brenners wird in derselben Art errechnet wie bei einer Anpassung.

## Ansprüche

1. Verfahren zum maschinellen Brennschneiden eines Rohres oder Verschweißen von mindestens einem Nebenrohr an einem Rohr, wobei das Rohr in einem Futter eingespannt um die Rohrlängsachse über Antriebsrollen rotierend bewegt wird und ein Brenner außerhalb oder innerhalb des Rohres verstellbar entlang der zu schneidenden oder verschweißenden Durchdringungslinie geführt wird, wobei das Rohr entweder durch das Futter oder das Futter und die Antriebsrollen oder nur durch die Antriebsrollen (ohne Futter) rotierend bewegt wird,
dadurch gekennzeichnet,
daß der Ist-Drehwinkel ($\gamma$) des Rohres und/oder die Ist-Drehgeschwindigkeit (v) des Rohres und/oder die axiale und/oder die radiale Ist-Lage ($x_s$, $x_r$) des Rohres gemessen wird bzw. werden und bei Abweichen der Ist-Werte ($\gamma$, v, $x_s$, $x_r$) von gewünschten Soll-Werten entsprechende Korrekturen der Brenner- oder Schweißkopfbewegung oder des Rohres vorgenommen werden.

2. Verfahren nach Anspruch 1,
dadurch gekennzeichnet,
daß der Ist-Wert bzw. die Ist-Werte ($\gamma$, v, $x_s$, $x_r$) des Rohres kontinuierlich gemessen wird bzw. werden und jeweils mit fest vorgegebenen Soll-Werten verglichen werden.

3. Verfahren nach Anspruch 1,
dadurch gekennzeichnet,
daß der Ist-Wert bzw. die Ist-Werte ($\gamma$, v, $x_s$, $x_r$) in vorgebbaren Zeitabständen gemessen werden und die momentanen Ist-Werte mit den vorangegangenen jeweiligen Ist-Werten verglichen werden.

5

4. Verfahren nach mindestens einem der Ansprüche 1 bis 3,
dadurch gekennzeichnet,
daß das Rohr vor dem Schweißen oder Brennscneiden mindestens eine Drehung von 360° durchläuft, bei der die tatsächliche Rohrgeometrie gemessen, die Meßwerte in einem Rechenspeicher gespeichert werden und bei dem Schweißen oder Brennschneiden entsprechend berücksichtigt werden.

5. Verfahren nach Anspruch 4,
dadurch gekennzeichnet,
daß die Rohrgeometrie vor dem Schweißen oder Brennschneiden über die gesamte Rohrlänge gemessen wird.

6. Verfahren nach mindestens einem der Ansprüche 1 bis 5,
dadurch gekennzeichnet,
daß der Ist-Drehwinkel ($\gamma$, ) und/oder die Ist-Drehgeschwindigkeit (v) und/oder die axiale und/oder die radiale Ist-Lage ($x_s$, $x_r$) eines festen Punktes des Rohres relativ zu mindestens einem Hilfskörper, der auf einer parallel zur Rohrachse liegenden Achse oder in der Rohrdrehachse feststehend angeordnet oder mit konstanter Drehgeschwindigkeit geführt wird, gemessen wird.

7. Verfahren nach Anspruch 6,
dadurch gekennzeichnet,
daß der Hilfskörper mindestens mit der Soll- oder Ist-Drehgeschwindigkeit des Rohres rotiert.

8. Verfahren nach Anspruch 6 oder 7,
dadurch gekennzeichnet,
daß zwischen dem festen Punkt des Rohres und dem Hilfskörper eine elektromagnetische Signalstrecke besteht.

9. Verfahren nach Anspruch 8,
dadurch gekennzeichnet,
daß als Sender ein Laser oder eine Infrarotlichtquelle und ein dementsprechender Empfänger verwendet werden.

10. Verfahren nach einem der Ansprüche 8 oder 9,
dadurch gekennzeichnet,
daß der Sender auf der Rohrmantelfläche und der Empfänger auf dem Hilfskörper angeordnet sind.

11. Verfahren nach mindestens einem der Ansprüche 8 bis 10,
dadurch gekennzeichnet,
daß der Sender oder der Empfänger, vorzugsweise mit der Soll-oder Ist-Drehgeschwindigkeit des Rohres auf einer Kreisbahn, die senkrecht zur Rohrlängsachse verläuft, in gleichem Abstand von dem Empfänger oder Sender auf der Rohrmantelfläche oder dazu parallel geführt wird.

12. Verfahren nach mindestens einem der Ansprüche 8 oder 9,
dadurch gekennzeichnet,
daß auf dem Rohr ein passives Element, vorzugsweise ein Signalwandler, angeordnet ist, das die vom Sender des Hilfskörpers ausgesandten Signale in umgewandelter Form zum Empfänger des Hilfskörpers reflektiert.

13. Verfahren nach einem der Ansprüche 6 oder 7,
dadurch gekennzeichnet,
daß an einem festen Punkt des Rohres ein Bügel befestigt ist, dessen freies Ende in einen in der Rohrlängsachse angeordneten, mit der Soll- oder Ist-Drehgeschwindigkeit des Rohres rotierend gelagerten Hilfskörper hineinragt und bei Drehwinkel-, Drehgeschwindigkeits-oder Lageabweichungen des Rohres ein Steuersignal an die Antriebsvorrichtung des Brenners oder des Schweißkopfes und/oder des Rohres abgibt.

14. Vorrichtung zur Durchführung des Verfahrens nach den Ansprüchen 1 bis 13, bestehend aus einer Spanneinrichtung mit einem Futter, in welcher ein Rohr so eingespannt ist, und/oder Antriebsrollen, auf denen das Rohr so gelagert ist, daß das Rohr rotierend bewegbar ist, und einer außerhalb oder innerhalb des Rohres verstellbar entlang der zu schneidenden oder verschweißenden Durchdringungslinie geführten Brennereinrichtung,
dadurch gekennzeichnet,
daß auf dem Rohr (1) ein Sender (5) oder Empfänger (7) und auf einer parallel zur Rohrdrehachse (9) liegenden Achse oder in der Rohrdrehachse (9) ein Hilfskörper (6, 12) mit einem Empfänger (7) oder einem Sender (5) feststehend oder mit einer konstanten Drehgeschwindigkeit führbar angeordnet ist und daß der Empfänger (7) mit einer Steuervorrichtung für die Brennerbewegung (4) oder für die geometrische Lage ($\gamma$, $x_s$, $x_r$) bzw. Drehgeschwindigkeit (v) des Rohres verbunden ist.

15. Vorrichtung nach Anspruch 14,
dadurch gekennzeichnet,

6

daß der Antrieb für den Hilfskörper (6, 12) auf jede Soll-oder Ist-Drehgeschwindigkeit (v) des Rohres (1) einstellbar ist.

16. Vorrichtung nach einem der Ansprüche 14 oder 15, gekennzeichnet durch einen Laser oder eine Infrarotlichtquelle als Sender (5).

17. Vorrichtung nach mindestens einem der Ansprüche 14 bis 16, dadurch gekennzeichnet, daß der Hilfskörper (6) auf einer zentrisch oder senkrecht zur Rohrlängsachse (9) angeordneten ringförmigen Schiene (10) rotierend führbar angeordnet ist.

18. Vorrichtung nach mindestens einem der Ansprüche 14 bis 17, dadurch gekennzeichnet, daß auf dem Rohr (1) ein passives Element, vorzugsweise ein Signalwandler, angeordnet ist, das die vom Sender (5) des Hilfskörpers (6) ausgesandten Signale in umgewandelter Form zum Empfänger (7) des Hilfskörpers (6) reflektiert.

19. Vorrichtung zur Durchführung des Verfahrens nach einem der Ansprüche 6 oder 7, bestehend aus einer Spanneinrichtung mit einem Futter, in welcher ein Rohr so eingespannt ist, und/ oder Antriebsrollen, auf denen das Rohr so gelagert ist, daß das Rohr rotierend bewegbar ist, und einer außerhalb oder innerhalb des Rohres verstellbar entlang der zu schneidenden oder verschweißenden Durchdringungslinie geführten Brennereinrichtung, dadurch gekennzeichnet, daß das Rohr (1) mit einem Bügel (11) verbunden ist, dessen freier Schenkel in einen in der Rohrlängsachse (9) angeordneten drehbar gelagerten Hilfskörper (12) hineinragt und daß die den freien Schenkel umgebenden Mantelflächen (12') des Hilfskörpers (12) mit Sensoren ausgestattet sind, die bei Berührung mit dem freien Schenkel über eine Signalleitung Steuersignale an die Antriebsvorrichtung des Rohres (1) oder des Brenners (4) abgeben.

Fig.1

Fig. 2

Fig. 3

Fig. 4

Fig. 5

10

7

5

6

1

Fig. 6

11

11a

12

9

12b

12a

1

# Fig.7

Fig. 8